# FASCICULE DE BREVET EUROPEEN

(11) **EP 2 525 965 B1**
(45) Date de publication et mention de la délivrance du brevet: **25.04.2018**
(21) Numéro de dépôt: 11701617.0
(22) Date de dépôt: 19.01.2011
(51) Int. Cl.: B29C 70/48, B29C 70/72, B64C 25/02, F16C 7/00, B29L 31/00

(54) **PROCEDE DE FABRICATION D'UN BRAS POUR STRUCTURE ARTICULEE TEL QU'UN BALANCIER EQUIPANT UNE STRUCTURE D'ATTERRISSEUR D'AERONEF**
VERFAHREN ZUR HERSTELLUNG EINES ARMS FÜR EINE SCHARNIERSTRUKTUR, Z. B. EINES SCHWENKARMS FÜR EINE FLUGZEUGFAHRWERKSTRUKTUR
METHOD FOR MAKING AN ARM FOR A HINGED STRUCTURE SUCH AS A ROCKER ARM FOR AN AIRCRAFT LANDING-GEAR STRUCTURE

(30) Priorité: 22.01.2010 FR 1050416
(43) Date de publication de la demande: 28.11.2012
(73) Titulaire: Safran Landing Systems, 78140 Vélizy-Villacoublay (FR)
(72) Inventeur: MASSON, Richard, F-78350 Les Loges en Josas (FR); DUNLEAVY, Patrick, F-91120 Palaiseau (FR)
(74) Mandataire: Parzy, Benjamin Alain
(86) Numéro de dépôt international: PCT/EP2011/000200
(87) Numéro de publication internationale: WO 2011/088992

(56) Documents cités:
- WO-A1-2009/153220
- US-A- 4 704 918

## Description

La présente invention concerne un procédé de fabrication d'un bras pour structure articulée tel qu'un balancier équipant une structure d'atterrisseur d'aéronef.

### ARRIERE PLAN DE L'INVENTION

Un balancier d'atterrisseur se présente par exemple sous forme d'une bielle ayant à chacune de ses extrémités une interface sous forme de palier ainsi qu'au moins une autre interface dite intermédiaire située entre ses extrémités et se présentant sous forme d'une chape.

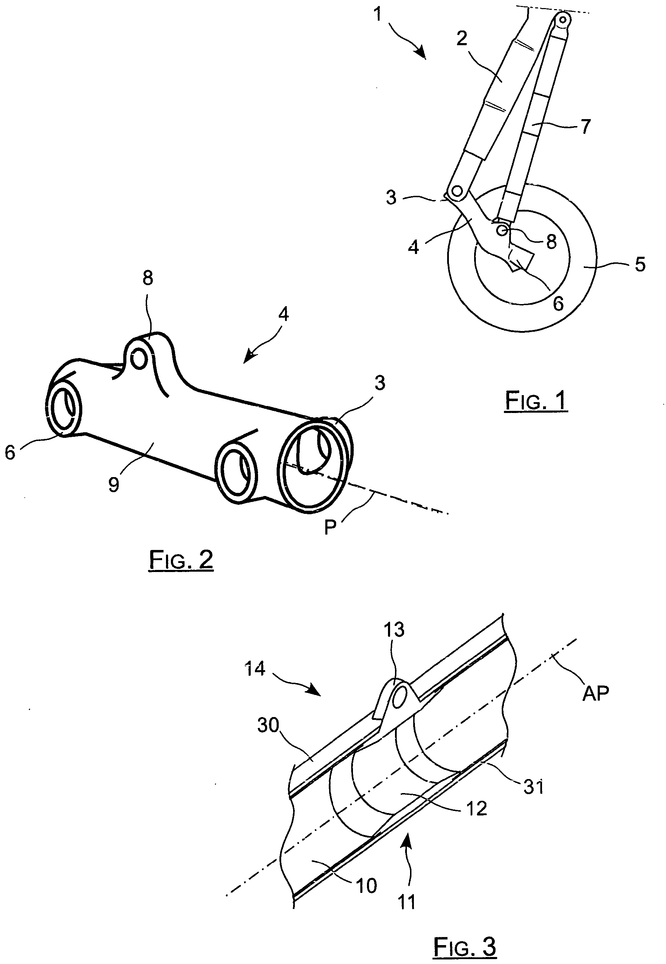

Dans la figure 1, on a représenté schématiquement un atterrisseur équipé d'un tel balancier. Cet atterrisseur qui est généralement repéré par 1 comprend une jambe principale 2 à l'extrémité inférieure de laquelle est montée une extrémité avant comprenant un pallier 3 d'un balancier 4, pour que ce balancier puisse pivoter par rapport à la jambe, autour d'un axe horizontal transversal.

Deux roues 5 de l'atterrisseur sont portées par un axe ou essieu transversal monté à l'extrémité arrière du balancier, c'est-à-dire au niveau de son palier arrière 6, ces roues étant ainsi montées de part et d'autre de ce balancier.

Complémentairement, un amortisseur repéré par 7 est interposé entre le balancier et la jambe de l'atterrisseur en ayant une extrémité inférieure solidarisée à la chape intermédiaire 8 du balancier 4 et une extrémité supérieure solidarisée à une partie supérieure de la jambe. Chaque extrémité de l'amortisseur 7 est apte à pivoter autour d'un axe horizontal par rapport à la pièce à laquelle elle est solidarisée.

Comme il ressort de la figure 1, lors d'un atterrissage, la réaction du sol sur les roues 5 tend à faire remonter l'extrémité arrière du balancier, à l'encontre des efforts exercés par l'amortisseur 7 sur la chape intermédiaire 8, ce qui permet d'amortir le choc d'atterrissage.

Ainsi, lors de l'atterrissage, et de même lorsque l'aéronef roule ou est immobilisé au sol, le balancier est principalement soumis à des efforts de flexion et de torsion exercés à peu près verticalement par la jambe au niveau de son extrémité avant, par les roues au niveau de son extrémité arrière, et par le ressort au niveau de la chape intermédiaire.

Ces efforts ont pour ordre de grandeur la masse de l'aéronef, de sorte que le balancier doit présenter une tenue mécanique importante, en particulier au niveau de ses interfaces, c'est-à-dire au niveau de ses paliers avant et arrière et au niveau de sa chape intermédiaire.

Dans la figure 2, on a représenté un tel balancier 4 seul. Il comprend un corps principal 9 s'étendant selon une direction principale P, et dont les deux extrémités comportent des paliers dits avant et arrière 3 et 6.

Comme visible sur la figure 2, le corps principal a une section transversale sensiblement constante le long de l'axe P, et il porte la chape intermédiaire (8) qui dépasse radialement de ce corps principal.

Compte tenu de la résistance mécanique importante qui est attendue pour un tel balancier, et de sa forme relativement complexe, il est typiquement fabriqué en acier à haute résistance usiné.

L'obtention d'un gain de masse significatif au niveau de cette pièce, en la fabriquant en matériau composite s'avère problématique compte tenu de la complexité de sa forme générale.

Dans une solution connue, un tel balancier en matériau composite est obtenu en fabriquant d'abord une bielle simple en matériau composite, dont le corps principal présente une section constante sensiblement circulaire. Un collier portant une chape double est ensuite rapporté autour de cette bielle, ce collier étant serré autour du corps principal pour en être rigidement solidaire.

Cette solution reste très contraignante en matière de coûts de fabrication et en matière de poids puisqu'elle induit de fabriquer le balancier sous forme de plusieurs pièces en matériau composite devant être assemblées les unes aux autres tout en assurant une tenue mécanique élevée.

Le document WO 2009/153220 A1 décrit un procédé de fabrication d'une pièce structurale en matériau composite comportant un organe de liaison situé aux extrémités de la pièce.

### OBJET DE L'INVENTION

Le but de l'invention est de proposer un procédé de fabrication d'un bras pour structure articulée en matériau composite intégrant au moins une interface située entre ses extrémités, présentant un coût de fabrication réduit.

### BREVE DESCRIPTION DE L'INVENTION

A cet effet, l'invention à pour objet un procédé de fabrication d'un bras pour structure articulée telle qu'une structure d'atterrisseur d'aéronef, ce bras comprenant un corps principal s'étendant selon une direction longitudinale, et comportant une interface dépassant radialement du corps principal, telle qu'une chape, ce procédé comportant les étapes de :
- fabriquer un insert comprenant une embase portant l'interface ;
- fabriquer un mandrin intégrant l'embase de l'insert de telle manière qu'une portion de la face externe de ce mandrin soit délimitée par une portion de la face externe de l'embase de l'insert ;
- appliquer une ou des couches de fibres renforçantes autour du mandrin et sur toute sa longueur, de telle manière que chaque couche soit traversée par l'interface sans la recouvrir ;
- injecter de la résine dans la ou les couches de fibres renforçantes et au niveau de la zone de contact de ces couches avec la face externe de l'embase ;
- polymériser la résine pour lier rigidement les couches de fibres renforçantes et l'embase de l'insert ;

Le procédé de fabrication selon l'invention apporte une attention particulière au fait d'obtenir une cohésion optimale entre les couches et l'insert. Par ailleurs, contrairement à solution précédemment citée, la chape et l'embase formant l'insert sont réalisées en un seul tenant. Le bras ainsi obtenu est particulièrement résistant et léger répondant alors aux besoins d'une structure articulée telle qu'une structure d'atterrisseur d'aéronef à un coût réduit.

L'invention concerne également un procédé tel que défini ci-dessus, dans lequel l'embase a une forme généralement tubulaire et le mandrin est formé en prolongeant la face externe de l'embase avec au moins un manchon dans lequel on assure une jonction étanche entre ces deux éléments.

Par ailleurs, l'invention concerne un procédé tel que défini ci-dessus, dans lequel l'embase tubulaire présente une section longitudinale de forme biseautée agencée de manière à répartir les efforts sur les parois internes du corps principal.

### BREVE DESCRIPTION DES DESSINS

D'autres caractéristiques et avantages de l'invention apparaîtront à la lecture de la description qui suit de modes de réalisation particuliers de l'invention en relation avec les figures ci-jointes parmi lesquelles :
- la figure 1 est une vue latérale de la partie inférieure d'un atterrisseur d'aéronef comportant un balancier selon l'art antérieur ;
- la figure 2 est une vue en perspective d'un balancier selon l'art antérieur ;
- la figure 3 est une vue partielle en perspective et en coupe montrant une portion centrale du balancier selon l'invention ;
- la figure 4 est une vue latérale et en coupe de l'insert ;
- la figure 5 est une vue partielle, latérale et en couple du mandrin ;
- la figure 6 est une vue en perspective de l'opération de tressage selon le procédé de l'invention ;
- la figure 7 est une vue partielle, latérale et en coupe du balancier selon l'invention ;
- la figure 8 est une vue en perspective de la portion centrale du balancier selon l'invention ;
- la figure 9 est une vue partielle en perspective montrant une portion du balancier conformément à un deuxième mode de réalisation de l'invention ;
- la figure 10 est une vue partielle en coupe montrant une portion du balancier conformément à un troisième mode de réalisation de l'invention.

### DESCRIPTION DETAILLEE DE L'INVENTION

Comme visible en figure 3, l'idée à la base de l'invention est d'intégrer à un mandrin 10, un insert 11 comprenant une embase 12 portant une interface 13 telle qu'une chape, de recouvrir ce mandrin de plusieurs couches de fibres renforçantes tressées 31, pour injecter et polymériser de la résine dans ces couches afin d'obtenir une cohésion optimale entre les couches et l'insert.

L'embase 12 de l'insert est ainsi un élément du mandrin 10 formant une partie du support sur lequel des couches de fibres renforçantes 31 sont directement appliquées, de sorte que la résine solidarise efficacement ces couches à l'embase pour assurer un transfert optimal des efforts entre ces couches et l'insert.

De plus, l'embase 12 a ainsi une forme externe qui est rigoureusement complémentaire de la forme interne délimitée par les couches de fibres renforçantes 26, de sorte qu'elle est encastrée dans l'espace interne délimité par les couches de fibres renforçantes constituant le corps principal du balancier.

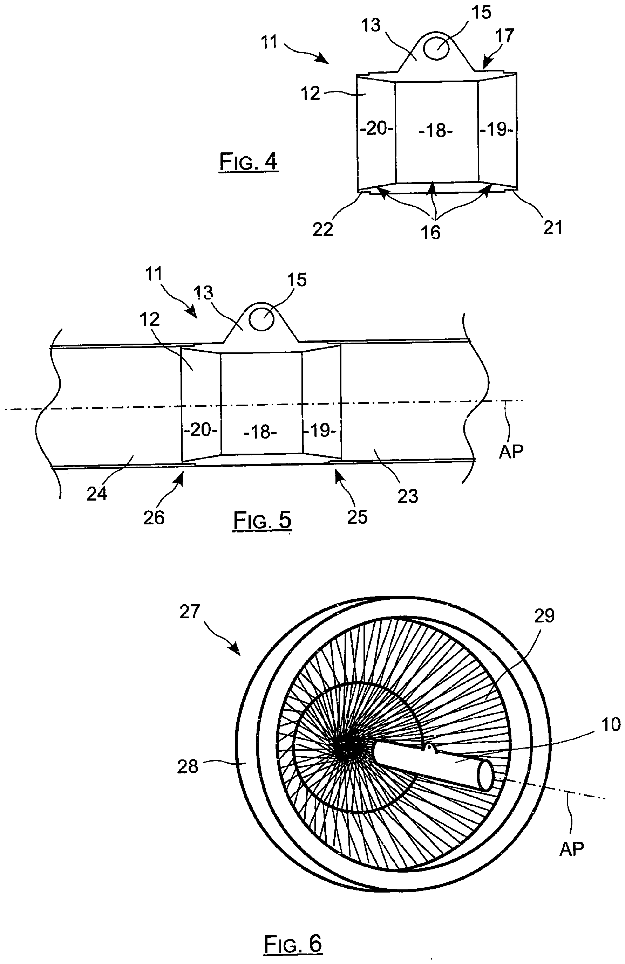

Comme illustré en figure 4, l'insert 11 comprend l'embase 12 portant la chape 13, celle-ci comprenant un perçage 15 permettant la fixation du balancier, à un autre élément non représenté qui est par exemple un amortisseur de l'atterrisseur.

L'embase 12 a une forme de révolution autour d'un axe AP : elle est généralement tubulaire en étant délimitée par une face interne 16 et par une face externe 17, toutes deux de révolution. La face interne 16 comprend une zone centrale cylindrique 18 prolongée de part et d'autre respectivement par deux zones tronconiques 19, 20 formant évasements. La face externe 17 est quant à elle essentiellement cylindrique et comporte à chacune de ses extrémités un épaulement, repérés respectivement par 21 et 22.

Grâce aux portions évasées 19, 20 de la face interne, l'embase tubulaire 12 présente une épaisseur qui décroît vers chacune de ses extrémités, de sorte que vues en coupe longitudinale, les extrémités de cette embase sont biseautées. Cette diminution d'épaisseur confère à l'embase une flexibilité plus importante au niveau de ses extrémités que dans sa région centrale plus épaisse. Cette forme biseautée permet une variation continue de la flexibilité limitant tout saut de raideur.

L'insert 11 peut être fabriqué par thermo compaction : il est obtenu à partir de matériau composite comportant des fibres courtes non tissées amalgamées dans des directions quelconques et compactées puis noyées dans une résine à chaud. L'ensemble est placé dans un moule permettant d'obtenir la forme souhaitée de l'insert. La pièce brute ainsi obtenue est éventuellement usinée pour que sa géométrie réponde à une cotation tolérancée prédéfinie.

L'usinage de la chape 13 peut être effectué avant montage du mandrin 10, ou bien ultérieurement. Cette chape définit un moyen de fixation traversant les couches de matériau composite tressées périphériques, elle peut être, comme illustré, une chape simple, une chape double ou tout autre moyen de fixation.

L'insert 11 peut aussi être fabriqué, à l'aide de fibres longues, par bobinage, ou bien par drapage, c'est-à-dire en appliquant des couches tissus pré imprégnées de résine ou encore à partir d'un tressage cartésien injecté, Quelque soit le mode de fabrication choisi, l'insert est ensuite pré polymérisé.

De manière générale, si la chape 13 est destinée à subir des efforts relativement faibles, l'insert 11 peut être fabriqué par thermo compaction. Si au contraire, cette chape 13 doit subir des efforts importants, l'insert 11 est avantageusement fabriqué par bobinage, par drapage ou par tressage cartésien.

Une fois finalisé, l'insert est pré polymérisé lui conférant une rigidité suffisante pour constituer une partie du mandrin 10 sur lequel une ou plusieurs couches 31 de fibres renforçantes tressées pourront être appliquées.

De chaque côté de l'insert 11 sont ensuite fixés deux manchons cylindriques 23 et 24, pour former le mandrin 10 s'étendant longitudinalement selon un axe AP.

Chaque manchon 23, 24 est fabriqué à partir de matériau composite, par exemple en utilisant des portions de tissu pré imprégné de résine appliquées sur un support cylindrique. Ce support est ensuite retiré, après solidification au moins partielle de la résine pré imprégnée, de manière à constituer des manchons ayant une rigidité suffisante pour leur conférer une forme propre.

Chaque manchon est alors pré polymérisé conférant à ces derniers une rigidité suffisante pour définir une partie du mandrin 10 sur lequel une ou plusieurs couches 31 de fibres renforçantes tressées pourront être appliquées.

L'assemblage des manchons 23, 24 avec l'insert 11 pour former le mandrin 10, est réalisé de manière étanche au niveau des jonctions 25, 26 entre l'embase 12 de l'insert et chaque manchon 23, 24 pour éviter toute introduction de résine dans le mandrin 10 lors d'une opération ultérieure d'injection de résine.

Plus particulièrement, une extrémité du manchon cylindrique 23 est emboîtée autour de l'extrémité correspondante de l'embase 12 généralement tubulaire, en s'engageant autour de l'épaulement 21, au niveau d'une zone de jonction repérée par 25. Il en va de même du manchon 24 dont l'extrémité est engagée autour de l'autre épaulement 22 de l'embase 12, au niveau d'une autre jonction 26.

Afin d'améliorer l'étanchéité au niveau de chaque jonction 25, 26, de la colle ou tout autre matériau appropriée peut être utilisé.

Par ailleurs, la profondeur de chaque épaulement 21, 22 correspond à l'épaisseur de chaque manchon 23, 24, de telle manière que la face externe du mandrin ainsi obtenu est généralement continue et lisse, en particulier au niveau de chaque jonction 25, 26.

Autrement dit, le diamètre externe de l'embase 12 au niveau de chaque épaulement correspond au diamètre interne de chaque manchon, et le diamètre nominal de la face externe 17 de l'embase, entre ses épaulements, correspond au diamètre externe des manchons 23, 24.

Une fois assemblé, le mandrin 10 présente une rigidité suffisante pour constituer un support sur lequel une ou plusieurs couches 31 de fibres renforçantes tressées peuvent être appliquées.

Comme visible en figure 6, le mandrin 10 est alors installé dans une machine à tresser 27 qui comporte essentiellement un anneau porteur 28 à la face arrière duquel sont montées une série de bobines de fibre telles que des fibres de carbone, portées par des supports mobiles rotatifs. Ces fibres 29 se rejoignent dans une région qui est située sensiblement sur l'axe P tout en étant décalée le long de cet axe par rapport au plan de l'anneau support 28.

L'anneau porteur 28 est centré sur l'axe P, tout en s'étendant selon un plan normal à cet axe. Lorsque le cycle de tressage est lancé, le mandrin 10 est déplacé le long de l'axe AP par rapport à l'anneau porteur 28, ce qui provoque le tressage d'une chaussette de fibres à la face externe du mandrin 10.

En fonctionnement, la vitesse du mandrin 10 par rapport à l'anneau 28 est ajustée pour que les fibres tressées 29, autour de celui-ci, soient orientées avec une inclinaison prédéterminée par rapport à l'axe AP.

Plusieurs passages sont ainsi réalisés pour constituer plusieurs couches de fibres tressées 31 entourant le mandrin 10, chaque couche ayant une épaisseur sensiblement constante.

Lors de cette opération, on évite de recouvrir la chape. Selon les modes de réalisation et à ce niveau du procédé de fabrication, soit la chape est usinée selon sa forme définitive soit elle le sera ultérieurement.

Dans le cas où la chape n'est pas encore usinée, sa forme intermédiaire pourra être de type tronconique ou elliptique s'étendant radialement vers l'extérieur du balancier de sorte qu'aucune des fibres se situant au niveau de la chape ne puisse être déposée sur cette dernière mais, au contraire, ces fibres glissent le long de la paroi tronconique ou elliptique pour être disposées à sa base sur le mandrin 10.

De la même manière, si la chape est déjà formée, les fibres renforçantes tressées sont disposées de part et d'autre de la chape de manière à ce que cette dernière ne soit pas recouverte.

Alternativement et quelque soit l'état de la chape 13, on peut recouvrir cette dernière d'une protection de type tronconique ou elliptique pour les mêmes raisons.

Une fois que les différentes couches tressées 31 ont été appliquées, la pièce brute qui comporte donc le mandrin 10 entouré par les différentes couches de fibres 31, est placée dans un moule.

Une résine est alors injectée de manière à imprégner complètement les différentes couches de fibres tressées 31, jusqu'à atteindre la face externe du mandrin 10. A cet effet, les jonctions 25, 26 entre l'embase 12 et les manchons 23, 24 qui sont étanches évitent toute intrusion de résine dans le mandrin 10 lors de l'injection.

La polymérisation de la résine est assurée par chauffage : après injection de la résine, le moule est piloté pour provoquer un cycle de cuisson qui assure le durcissement de la résine dans les couches 31 de matériau composite entourant le mandrin 10.

Une fois polymérisée, cette résine apporte la cohésion entre le mandrin 10 et ces couches 31, en particulier au niveau de la zone de contact 32 où les couches 31 sont au contact de la face externe 17 de l'insert 11, afin d'obtenir une transmission optimale des efforts appliqués à l'insert, vers les couches périphériques de fibres tressées 31.

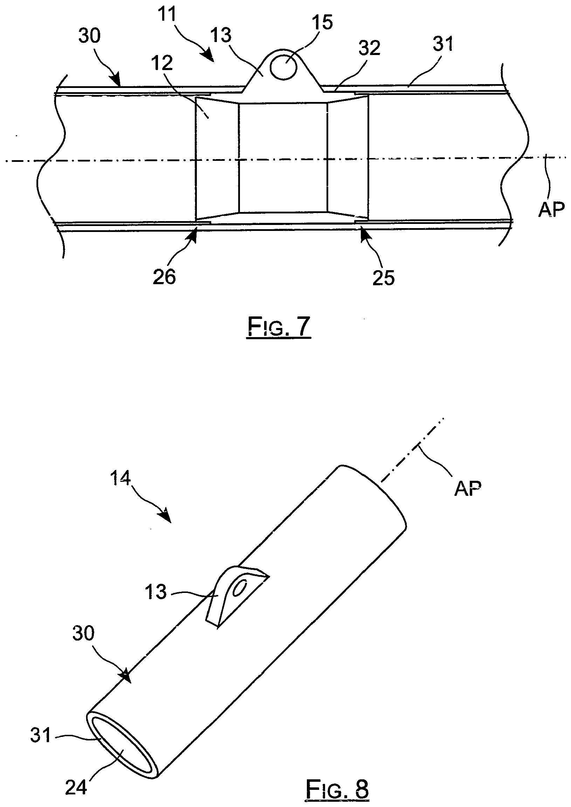

Comme visible dans les figures 7 et 8, la portion centrale du balancier fabriqué conformément à l'invention comporte ainsi le mandrin 10 composé de l'insert 11 et des manchons 23 et 24, ainsi qu'un ensemble de couches de fibres renforçantes entourant ce mandrin 10 tout en étant noyées dans de la résine durcie.

Le mandrin donne d'une part à l'ensemble sa forme générale en constituant un support sur lequel les couches de fibres renforçantes sont appliquées pour former le corps principal 30, et grâce à son insert 11 portant la chape 13 il permet d'assurer une liaison optimale entre la chape 13 et ce corps principal.

Comme on l'aura compris, les figures montrent uniquement la portion centrale du balancier selon l'invention, c'est-à-dire la portion comprenant la chape 13. Mais les extrémités de ce balancier comprennent chacune une interface non représentée se présentant par exemple sous forme de paliers pouvant être obtenus par perçage transversal de chaque extrémité de ce balancier.

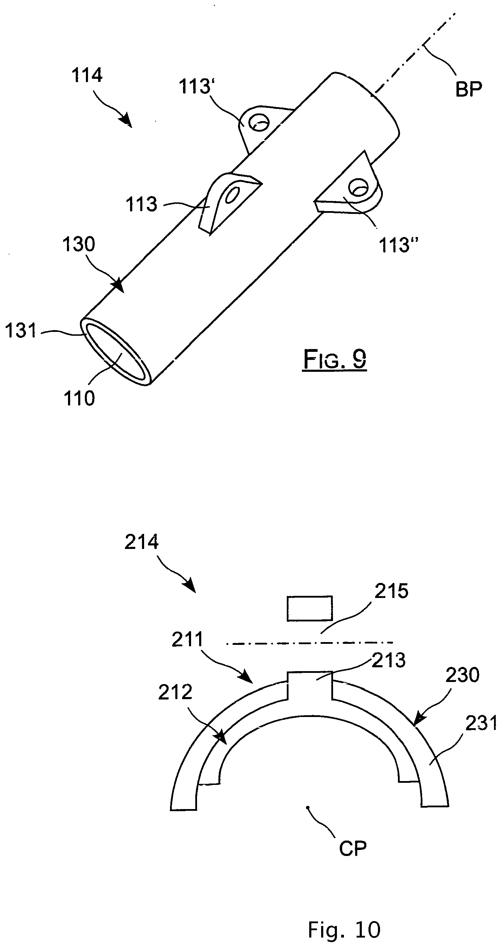

Le procédé qui peut s'appliquer à la fabrication de balanciers du type représenté aux figures 3 à 8, s'applique également à d'autres types de balanciers, comme par exemple celui de la figure 9, qui comprend trois chapes 113, 113', 113'' au lieu d'une seule.

Comme visible dans la figure 9, les chapes 113', 113'' sont disposées de manière diamétralement opposées par rapport à l'axe BP et la chape 113 est espacée longitudinalement selon ce même axe et selon un angle de 90° par rapport aux chapes 113' et 113''. Dans une telle configuration les chapes 113, 113' et 113'' peuvent être soit raccordées à un unique insert soit réparties sur deux inserts. Dans ce deuxième cas, les chapes 113' et 113'' sont alors intégrées au même insert et la chape 113 à un deuxième insert placée de manière limitrophe au premier insert selon l'axe longitudinal BP.

Selon les besoins, le manchon pourra alors intégrer un insert ou plus, chaque insert pouvant alors porter une ou plusieurs chapes espacées longitudinalement selon l'axe BP, et/ou angulairement autour de ce même axe.

Selon d'autres modes de réalisation, comme illustré en figure 10, le balancier peut intégrer un insert de section non fermée, tel qu'un demi tube portant la chape 213. L'assemblage de l'insert 211 et de la couche de fibres renforçantes tressées 231 peut être consolidé par une liaison de type mécanique telle que des rivets, vis avec boulons ou autres. Ces derniers éléments étant alors montés après polymérisation de la résine, par perçage puis, selon le mode de liaison, par vissage de manière à accroître encore la cohésion entre l'insert et le corps principal en fibres de carbone.

Quelque soit le mode de réalisation choisi, le mandrin est avantageusement fabriqué en matériau composite comportant une résine du même type que celle qui est injectée dans les couches externes de fibres renforçantes tressées pour obtenir la meilleur cohésion avec ces couches externes. Par ailleurs, les inserts comportent avantageusement des fibres du même type que celles des couches de fibres renforçantes externes tressées pour présenter une résistance mécanique importante.

Cela étant, le mandrin peut aussi être fabriqué dans un autre matériau, tant en ce qui concerne le manchon que pour ce qui est des inserts de renforcement, pour autant que ces éléments présentent les caractéristiques requises en ce qui concerne leur résistance mécanique et la possibilité d'assurer une cohésion optimale entre eux et les couches de fibres renforçantes tressées.

## Revendications

1. Procédé de fabrication d'un bras pour structure articulée telle qu'une structure d'atterrisseur d'aéronef, ce bras comprenant un corps principal (30 ; 130 ; 230) s'étendant selon une direction longitudinale (AP ; BP ; CP), et comportant une interface (13 ; 113 ; 213) dépassant radialement du corps principal, telle qu'une chape, ce procédé comportant les étapes de :
- fabriquer un insert (11 ; 211) comprenant une embase (12; 212) portant l'interface ;
- fabriquer un mandrin (10 ; 110) intégrant l'embase de l'insert de telle manière qu'une portion de la face externe de ce mandrin soit délimitée par une portion de la face externe (17 ; 217) de l'embase de l'insert ;
- appliquer une ou des couches de fibres renforçantes (31 ; 131 ; 231) autour du mandrin et sur toute sa longueur, de telle manière que chaque couche soit traversée par l'interface (13 ; 113 ; 213) sans la recouvrir ;
- injecter de la résine dans la ou les couches de fibres renforçantes (31 ; 131 ; 231) et au niveau de la zone de contact (32) de ces couches (31) avec la face externe (17 ; 217) de l'embase ;
- polymériser la résine pour lier rigidement les couches de fibres renforçantes et l'embase de l'insert ;

2. Procédé selon la revendication 1, dans lequel l'embase (12 ; 212) a une forme généralement tubulaire.

3. Procédé selon l'une des revendications précédentes, dans lequel le mandrin (10 ; 110) est formé en prolongeant la face externe de l'embase (17; ; 217) avec au moins un manchon (23 ; 24).

4. Procédé selon la revendication 3, dans lequel on assure une jonction étanche (25, 26) entre l'embase (12; 212) et chaque manchon (23, 24).

5. Procédé selon la revendication 4, dans lequel l'embase (12; 212) tubulaire présente une section longitudinale de forme biseautée (19, 20) agencée de manière à répartir les efforts sur les parois internes du corps principal (30 ; 130 ; 230).

## Patentansprüche

1. Verfahren zur Herstellung eines Arms für eine angelenkte Struktur, wie z. B. eine Luftfahrzeugfahrwerkstruktur, wobei dieser Arm einen Hauptkörper (30; 130; 230) umfasst, der sich in einer Längsrichtung (AP; BP; CP) erstreckt, und eine von dem Hauptkörper radial vorstehende Schnittstelle (13; 113; 213) enthält, wie z. B. einen Gabelkopf, wobei dieses Verfahren die Schritte umfasst:
- Herstellen eines Einsatzes (11; 211), der eine Basis (12; 212) umfasst, die die Schnittstelle trägt;
- Herstellen eines Dorns (10; 110), der die Basis des Einsatzes derart integriert, dass ein Abschnitt der Außenfläche dieses Dorns von einem Abschnitt der Außenfläche (17; 217) der Basis des Einsatzes begrenzt wird;
- Aufbringen einer oder mehrerer Schichten (31; 131; 231) aus verstärkenden Fasern um den Dorn herum und über seine gesamte Länge, derart, dass jede Schicht von der Schnittstelle (13; 113; 213) durchsetzt wird, ohne diese zu überdecken;
- Einspritzen von Harz in die Schicht(en) (31; 131; 231) von verstärkenden Fasern und im Bereich der Kontaktzone (32) dieser Schichten (31) mit der Außenfläehe (17; 217) der Basis;
- Polymerisieren des Harzes, um die Schichten aus verstärkenden Fasern und die Basis des Einsatzes starr zu verbinden.

2. Verfahren nach Anspruch 1, bei dem die Basis (12; 212) eine im Allgemeinen rohrförmige Form hat.

3. Verfahren nach einem der vorhergehenden Ansprüche, bei dem der Dorn (10; 110) unter Verlängerung der Außenfläche der Basis (17; 217) mit mindestens einer Hülse (23; 24) geformt ist.

4. Verfahren nach Anspruch 3, bei dem man eine dichte Verbindung (25, 26) zwischen der Basis (12; 212) und jeder Hülse (23, 24) sicherstellt.

5. Verfahren nach Anspruch 4, bei dem die rohrförmige Basis (12; 212) einen Längsquerschnitt mit abgeschrägter Form (19, 20) aufweist, der so ausgebildet ist, dass er die Kräfte auf die Innenwände des Hauptkörpers (30, 130; 230) verteilt.

## Claims

1. A method for making an arm for a hinged structure such as an aircraft landing gear structure, this arm comprising a main body (30; 130; 230) extending in a longitudinal direction (AP; BP; CP), and including an interface (13; 113; 213) such as a yoke radially protruding from the main body, this method including the steps of:
- making an insert (11; 211) including a base (12; 212) carrying the interface;
- making a mandrel (10; 110) integrating the base of the insert so that a portion of the external surface of this mandrel is delimited by a portion of the external face (17; 217) of the base of the insert;
- applying one or more layers of reinforcing fibers (31; 131; 231) around the mandrel and over all its length, so that each layer has the interface (13; 113; 213) passing through it without covering the interface;
- injecting resin into the layer or layers of reinforcing fibers (31; 131; 231) and at the level of the area of contact (32) of these layers (31) with the external face (17; 217) of the base; and
- polymerizing the resin to bind rigidly the layers of reinforcing fibers and the base of the insert.

2. The method claimed in claim 1, wherein the base (12; 212) has a generally tubular shape.

3. The method claimed in either one of the preceding claims, wherein the mandrel (10; 110) is formed in line with the external face of the base (17; 217) with at least one sleeve (23; 24).

4. The method claimed in claim 3, wherein a sealed junction (25, 26) is made between the base (12; 212) and each sleeve (23, 24).

5. The method claimed in claim 4, wherein the tubular base (12; 212) has a longitudinal section of beveled shape (19, 20) adapted to distribute the forces on the internal walls of the main body (30; 130; 230).
